# EUROPEAN PATENT APPLICATION

(11) **EP 4 400 993 A1**
(43) Date of publication of application: **17.07.2024**
(21) Application number: 23305039.2
(22) Date of filing: 11.01.2023
(51) Int. Cl.: G06F 21/10, G06F 21/30, G06F 21/60, H04L 9/32, H04L 9/40, H04W 12/06, H04W 12/10

(54) **SECURE ON-BOARDING OF PERSONAL ATTRIBUTES ON AN EXTERNAL ENTITY**

(71) Applicant: THALES DIS FRANCE SAS, 92190 Meudon (FR)
(72) Inventor: FAHER, Mourad, 78160 MARLY LE ROI (FR); DEBOIS, Georges, 75013 PARIS (FR)
(74) Representative: Quintero Romero, Manuel

(57) **Abstract**

The invention provides a method for on-boarding at least one personal attribute from a token to an external entity (200), the method comprising:
- authenticating (204) the external entity by the token;
- if the external entity is authenticated, computing (206) at least one shared session key by both the external entity and the token;
- ciphering at least one personal attribute stored by the token based on the at least one shared session key;
- on boarding the at least one personal attribute from the token to the by transferring (207) the ciphered at least one personal attribute to the external entity, on a communication link between the token and the external entity.

## Description

### TECHNICAL FIELD

This invention relates to the field of on-boarding of attributes stored on a token, and more particularly, to on-boarding of personal attributes to an external entity, for storage, access to a service or resource, authentication or other purposes.

### BACKGROUND OF THE INVENTION

A person is generally associated to several personal attributes, that enable to identify/authenticate this person. A subset of these personal attributes, which is the minimum set of data that can be used to authenticate a person, may be called Personal Identification Data, PID.

Such personal attributes are usually written on hardware objects, such as an ID card for example.

However, with the development of digital networks and digital services, personal attributes tend to be more and more in the form of digital data. Digital personal attributes can be used to access an online service, to authenticate a person for security purposes or to access to some digital or hardware resources.

Nowadays, hardware tokens such as electronic ID card may store in an electronic way, personal attributes of a person, such as personal identification data for example.

As these digital personal attributes enable a person to be identified and authenticated to access to many resources or services, including governmental services, the security associated with the storage and communication of personal attributes is critical.

In some countries, regulations aim at defining secure protocols and processes to regulate the storage of personal attributes such as PIDs in digital wallets. This is for example the case in Europe, where elDAS2 Regulation is currently developed.

However, there is no known method allowing to derive, or on-board, personal attributes that are stored on a token, such as an electronic ID card, to an external entity, such as a user device (a Smartphone for example) or to a remote server, in a secure manner, while preventing attribute cloning and man in the middle attacks for example.

Therefore, there is a need for a secure on-boarding of personal attributes from a token storing them, to an external entity, such as a remote server or a user device.

### SUMMARY OF THE INVENTION

The present invention provides a solution for all the aforementioned problems by method for on-boarding at least one personal attribute from a token to an external entity according to claim 1, and a related system according to claim 11. In dependent claims, preferred embodiments of the invention are defined.

In a first inventive aspect, the invention provides a method for on-boarding at least one personal attribute from a token to an external entity, the method comprising:
- authenticating the external entity by the token ;
- if the external entity is authenticated, determining at least one shared session key that is computed by both the external entity and the token;
- ciphering at least one personal attribute stored by the token based on the at least one shared session key;
- on boarding the at least one personal attribute from the token to the external entity by transferring the ciphered at least one personal attribute to the external entity, on a communication link between the token and the external entity.

Therefore, the method according to the invention allows a secure on-boarding of at least one personal attribute from a token to an external entity, such as a digital wallet of a user device or a remote server such as a relaying party or a trust service provider. The safety of the on-boarding process is ensured by the invention because:
- the at least one personal attribute is transferred to the external entity only if it is authenticated. This allows transferring the personal attribute to external entities that can be trusted;
- the at least one personal attribute is ciphered before being transferred, based on a shared session key that can only be computed by the token and the external entity, which prevents a third party intercepting the ciphered at least one personal attribute from making use of the personal attribute, as it cannot decipher it.

According to some embodiments of the invention, if the external entity is authenticated, the token may transmit at least one public information of the token to the external entity, and the external entity may verify a level of assurance of the token based on the at least one public information of the token.

This allows a bidirectional authentication of both parties involved in the on-barding process. The external entity may therefore link the at least one personal attribute with the public information of a user.

According to some embodiments of the invention, if the level of assurance of the token is verified, the external entity may send a confirmation message to the token, and the token may cipher the at least one personal attribute and transfer the ciphered at least one personal attribute to the external entity only if the confirmation message is received by the token.

This therefore enables to perform the transfer of the ciphered at least one personal attribute, only if both parties are authenticated and satisfy with predetermined security criteria. The computing resources of the token and external entity therefore are optimized, as well as the use of the communication link.

According to some embodiments of the invention, authenticating the external entity may comprise receiving a public certificate of the external entity, and verifying the public certificate using a public key of a certification authority.

This allows avoiding any man in the middle attack as the external entity can be authenticated based on data provided by a trusted certification authority.

According to some embodiments of the invention, the external entity may generate a pair of external entity ephemeral keys comprising an external entity ephemeral public key and an external entity ephemeral private key, the external entity ephemeral public key may be signed with a static private key of the external entity and transmitted by the external entity to the token, the token may generate a pair of token ephemeral keys comprising a token ephemeral public key and a token ephemeral private key, and the token ephemeral public key may be transmitted from the token to the external entity. The token may compute the at least one shared session key based on the token ephemeral private key and the external entity ephemeral public key, the external entity may compute the at least one shared session key based on the token ephemeral public key and the external entity ephemeral private key.

This allows to enhance the security associated with the transfer of the ciphered at least one personal attribute. Indeed, the at least one shared session key is computed based on ephemeral data generated both by the external entity and the token. For example, the ephemeral keys may be generated at each connection. The fact that the external entity ephemeral public key is signed by the static private key of the external entity enables to avoid a man-in-the-middle attack.

According to a first embodiment, the token is connected to a user device via a first communication link, the external entity is a remote server, and the user device is able to access the remote server via a communication network.

A user device can therefore be used as proxy by the token to on-board the at least one personal attribute on a remote server.

In complement according to the first embodiment, the method may further comprise a prior step of requesting a service to the remote server by the user device, and in response to the service request, receiving a list of at least one requested attribute from the remote server, said list of at least one requested personal attribute being conditional for accessing a service provided by the distant server. The at least one personal attribute on boarded on the remote server may be comprised in the list of at least one requested personal attribute.

The on-boarding method can therefore be used to access services provided by a remote server, the access to the service being conditioned by the on-boarding of at least one personal attribute.

In complement according to the first embodiment, the received list of at least one requested personal attribute may be displayed on a graphical user interface of the user device, the method may further comprise receiving a validation input for at least one validated personal attribute in the list of at least one requested attribute, and the at least one attribute on boarded on the distant server may be among the at least one validated personal attribute.

This allows to enhance the privacy associated with the on-boarding process, as personal attribute cannot be transferred without the agreement of the user.

In complement, the confirmation sent by the external entity may comprise a secure list of at least one requested personal attribute, the token may cipher and transfer the at least one requested personal attribute of the secure list, if the at least one requested personal attribute is among the at least one validated personal attribute.

This allows the on-boarded at least one personal attribute to meet two criteria: consented by the user and requested by an authenticated external entity. This also avoids the external entity to request additional personal attributes in the secure list, for which the user did not previously provide consent. The privacy associated with the method is therefore enhanced.

According to a second embodiment, the external entity may be a user device, the user device comprising a digital wallet, and, upon reception of the ciphered at least one personal attribute, the user device deciphers the at least one ciphered attribute based on the at least one shared session key, and stores the at least one personal attribute in the digital wallet.

This allows to securely on-board the at least one personal attribute on a digital wallet of the user device. The at least one personal attribute can therefore be stored on a secure storage and further use of the at least one personal attribute, for accessing to services for example or authenticating the user, is facilitated.

In a second inventive aspect, the invention provides a system for on-boarding personal attributes from a token to an external entity, comprising:
- a communication link between the token and the external entity;
- the token, storing at least one personal attribute, and being configured to authenticate the external entity, and, if the external entity is authenticated, to compute at least one shared session key;
- the external entity being configured to compute the shared session key;
wherein the token is further configured to cipher at least one of the stored personal attribute based on the at least one shared session key and to transfer the ciphered at least one personal attribute to the external entity, on the communication link, so as to on-board the at least one personal attribute on the external entity.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this specification, the term "comprises" and its derivations (such as "comprising", etc.) should not be understood in an excluding sense, that is, these terms should not be interpreted as excluding the possibility that what is described and defined may include further elements, steps, etc.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
[Fig. 1] shows a system for on-boarding of personal attributes from a token to an external entity, according to some embodiments of the invention;
[Fig. 2] shows steps of a method for on-boarding of personal attributes according to some embodiments of the invention ;
[Fig. 3] shows steps of a method for on-boarding of personal attributes according to a first embodiment of the invention;
[Fig. 4] shows steps of a method for on-boarding of personal attributes according to a second embodiment of the invention;
[Fig. 5] shows a structure of a token of a system according to some embodiments of the invention; and
[Fig. 6] shows a structure of an external entity of a system according to some embodiments of the invention.

### DETAILED DESCRIPTION OF THE INVENTION

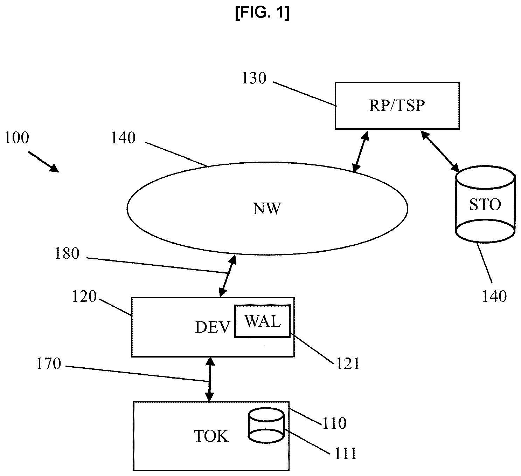

**Figure 1** shows a system for on-boarding of personal attributes from a token 110 to a digital wallet 121 or to a distant server 130, and more generally to an external entity. The external entity is external to the token 110, meaning that it is distinct from it. It can however be implemented on the same device as it will be explained in what follows.

A personal attribute refer to any attribute that is proper to a given person. In particular, personal attributes may be used to identify and authenticate the person towards third parties. Such authentication may enable to give a conditional access to some resources or services hosted by a third party.

Personal attributes may advantageously encompass Personal Identification Data, which are attributes that are commonly defined as necessary to uniquely identifying a person. The PID can be defined by some authority, such as a governmental identity, so that the PID required to identify persons on a given territory is identical. The PID may comprise several personal attributes, such as between 6 and 12 personal attributes for example.

The personal attributes may comprise the name of a person, surname, age, physical attributes such as eye color, skin color or height. The personal attributes may also comprise a driver license identification, a driver license status, a driver license type, a diploma, a real estate deed or a health insurance identification.

No restriction is attached to the person, which can be a natural person or a legal person.

"On-boarding" refers to the transfer/extraction/derivation of the user attributes from the token to another entity or party, for storage, for user identification and/or authentication, for attribute verification or for any other purpose.

The digital wallet 121 may be a software or hardware, that can be stored on, or included in, a user device 120. The digital wallet 121 may be an application locally stored on the user device 120 or remotely accessed by the user device 120. The digital wallet 121 may be associated with, or include, a digital safe. The data stored in the digital safe can only be accessed, read and write, by the digital wallet 121, so that other applications of the user device 120, or any other external entity, cannot access this data without requesting access to the digital wallet 121.

The user device 120 may be a Smartphone, a desk computer, a laptop, a touchpad, a personal digital assistant, or any other device having adequate processing capabilities and communication interfaces, such as described hereafter.

No restriction is also attached to the token 110. The token can be a physical hardware token that is external to the user device 120, such as an electronic IDentification token, elD, card. Such an external physical token may comprise some information written on it but may also store digital information including personal attributes, such as PID for example, in an internal memory 111. The token 110 can for example be a card with a chip. The elD can be read by an external device using any wired or wireless interface.

To this end, the system 100 comprises a communication link 170 between the user device 120 and the token 110. The communication link 170 may be a wired link or a wireless link. For example, the communication link 170 may be a wireless link based on a near field communication protocol, such as Bluetooth or preferably NFC. Alternatively, the communication link 170 may be a wired link, such as a card reader able to receive the token on one side, and to be connected to the user device 120 using a USB male interface, or any other interface that is compatible with a port of the user device 120. The user device 120 may also comprise a physical port that is able to receive the token 110, such as an SD reader.

Still alternatively, the token 110 may be a software hosted on the user device 120, such as an application stored and executed by the user device 120, that is different from the digital wallet 121.

As it will be explained hereafter, according to some embodiments of the invention, the user device 120 may be a notified device with a Level of Assurance, LoA, "high", which means that is it associated with a certificate attributing a LoA "High" to the user device 120. In other embodiments, the user device 120 is not associated with a LoA "high" and is used as a proxy for enabling a communication between the token 110 and the distant server 130.

A LoA is defined as the certainty with which an entity (a claimant) claiming to a particular identity during authentication can be trusted to actually be the claimant's true identity. Higher LoAs reduce the risk of a fraudulent identity and increase the security of transactions. For identity proofing, the LoA may depend on the method of identification (in person or remote for example), the concerned attributes, and the degree of certainty with which those attributes are verified. The LoA may comprise several levels, such as "low", "substantial" and "high". No restriction is however attached to the number of levels and to the way they are named. For example, the LoAs can be indexed by numbers comprised between 1 and N, N being the number of possible levels.

When the LoA of the user device 120 is high, the on-boarding method described hereafter may enable to transfer some personal attributes from the token 110 to the digital wallet 110 stored by the user device 120. Else, the on-boarding method described hereafter enables to transfer the personal attributes to a remote server, via the user device 120, which can act as a proxy.

To this end, the user device 120 may communicate with the remote server 130, via a communication network 140, which is preferably an IP network.

No restriction is attached to the communication link 180 to access the communication network 140, which can be a wireless link 180, such as a Wifi access, or a wired link 180, such as an ethernet access.

The remote sever 130 may be accessed by establishing a communication session, which is preferably a secured session, such as a Transport Layer Security, TLS, session. For example, the user device 120 and the distant server 130 may communicate via a communication protocol over TLS, such as HTTPS (HyperText Transfert Protocol Secure) or WSS (Web Socket Secure).

No restriction is attached to the distant server 130, which can be a Relying Party, which is a server providing access to a service application or to a resource. In that case, the on-boarding method described hereafter enables to transfer personal attributes to the distant server 130, so as to allow the user to access to the service or to the resource.

The distant server 130 may belong to a Trust Service Provider, TSP. A TSP, which is a service provider that is considered as reliable or trusted, by an authority, such as a governmental authority. The TSP may be allowed to provide and preserve digital certificate, to create and validate electronic signatures. For example, in the context of eIDAS, a list of TSP is maintained, each TSP being associated some digital certificates. In that case, the on-boarding method described hereafter may enable to transfer personal attributes from the token 110 to the distant server 130, so as to obtain a digital certificate for the user identified by the personal attributes for example.

The distant server 130 may also be a server in charge of a digital wallet application. In that case, the digital wallet application can be externalized in the network 140, instead of having it stored locally in the user device 130, and the on-boarding method described hereafter enables to transfer the personal attributes from the token 110 to the digital wallet server 130.

The remote server 130 may also alternatively be associated with a cloud service comprising a cloud storage 140. In that case, the on-boarding method described hereafter enables to transfer the personal attributes stored on the token 110 to the cloud storage 140.

Therefore, the on-boarding method described hereafter may be used for many purposes, and no restriction is attached to further processing that is applied to the personal attributes after being on-boarded from the token 110 to an external entity.

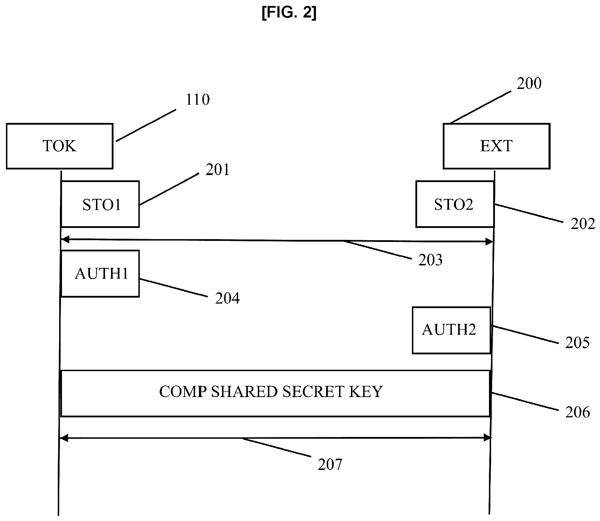

**Figure 2** shows steps of a method according to several embodiments of the invention.

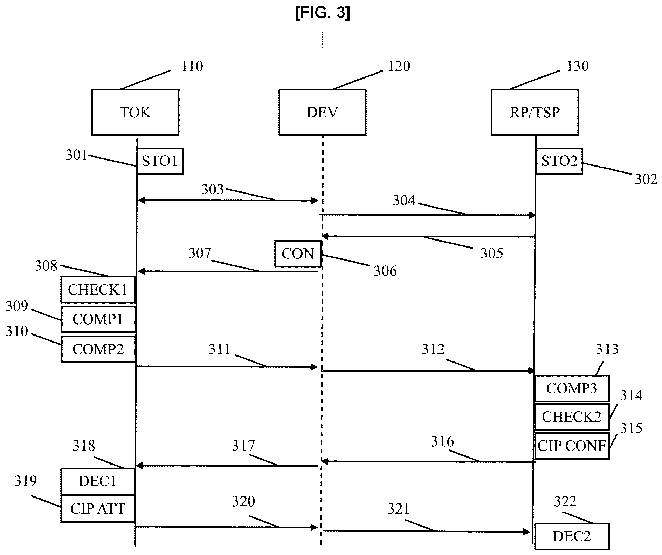

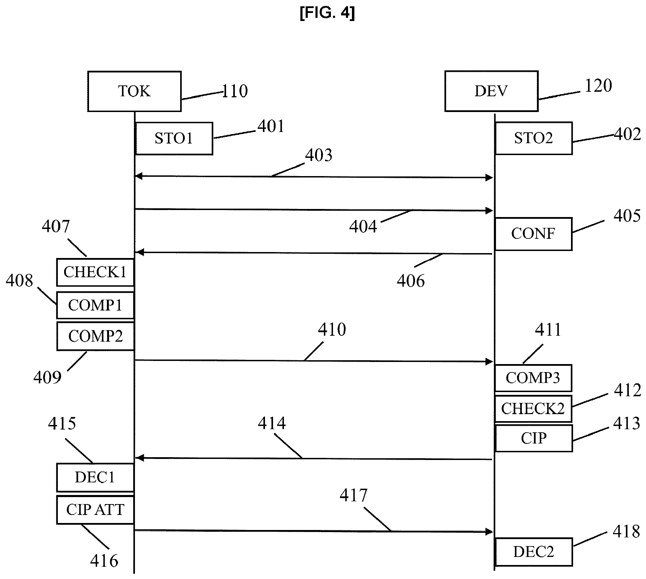

The main steps of a method according to the invention are shown on Figure 2. Detailed embodiments, comprising additional steps, will be further described referring to figure 3 and 4.

The method according to Figure 2 is carried out between the token 110 as previously described, and an external entity 200, which can alternatively be the user device 120 or the remote server 130 that have been previously described. In what follows, the example of an electronic ID card, named elD, is considered, for illustrative purpose.

At step 201, the token 110 stores at least one personal attribute of the user. As explained above, no restriction is attached to the at least one personal attribute, which can be a PID for example. In addition, the token 110 stores an elD static public key elD_StaticPubK and an elD static private key eID_StaticPriK. The token may also store public information authenticating the token 110, such as a public certificate elD_StaticPubKCertif comprising the elD static public key and other information about the user. The token 110 may also store a public root key of a certification authority CA_Root_PubK, the certification authority being not shown on the figures.

At step 202, the external entity 200 stores public information authenticating the external entity 200, such as a public certificate of the external entity, issued by the above certification authority. The public certification may identify a static public key of the external entity 200. The external entity 200 may also store a static private key of the external entity 200.

At step 203, a communication session is initiated between the token 110 and the external entity 200. Step 203 can for example follow a physical connection of the token 110 with the user device 120, such as via NFC or via a wired link. Also, step 203 may comprise the transmission of a request from the token 110 to the external entity 200. No restriction is attached to the request, which can be a request to access a service or a request for transferring personal attributes to a digital wallet.

During step 203, the external entity 200 may transmit public information authenticating the external entity 200 to the token 200. The public information may comprise the public certificate of the external entity 200, along with a signature obtained based on the static private key of the external entity 200.

At step 204, the token 110 authenticates the external entity 200 based on the public information received during the communication session 203. The authentication may for example be based on the public certificate of the external entity, which can be signed by the certification authority. As the token 110 stores the root public key of the certification authority, it can verify the integrity of the public certificate of the external entity 200. The token 110 may also check that the authenticated external entity 200 belongs to a list of trusted entities. If not, the method is preferably interrupted.

At an optional step 205, the external entity 200 may also verify that the token 110 can be trusted. To this end, the external entity 200 may verify a level of assurance, LoA, of the token based on at least one public information of the token 110. The public information of the token may be a public certificate of the token, ciphered with the at least one shared session key, as it will be described in further details referring to figures 3 and 4. The token 110 may be considered as trusted if the level of assurance associated with the token 110 is "high". Alternatively, the token 110 may be considered as trusted if the LoA associated with the token 110 is "substantial" or "high".

At step 206, each of the token 110 and the external entity 200 computes the at least one shared session key. On the token side, step 206 can be performed during or after step 204. On the external entity side, the at least one shared session key can be computed before or after step 205. If the public certificate used to authenticate the token at step 205 is ciphered with the at least one shared session key, then the external entity computes the at least one shared session key at step 206 before performing step 205.

The token 110 can compute the at least one shared session key based on information received at step 203, for example, when receiving the request for personal attributes from the external entity 200.

The external entity 200 can compute the at least one shared session key based on information transmitted by the token 110, which can be received between steps 204 and 206. Examples of computations of at least one shared session key will be described in details when referring to figures 3 and 4.

Once the at least one shared session key has been computed by both the token 110 and the external entity 200, a secure session can be established between the token 110 and the external entity 200. The secure session can be a peer to peer secure session, where the information exchanged by the token 110 and the external entity 200 is ciphered using the at least one shared session key.

The token 110 can therefore cipher the at least one personal attribute using the at least one shared session key and transmit the ciphered at least one personal attribute. The external entity 200 can therefore decipher the at least one personal attribute. A secure on-boarding of the at least one personal attribute on the external entity 200 is performed according to the invention.

Detailed embodiments of the method according to the invention are described hereafter, for illustrative purposes.

**Figure 3** shows the steps of a method for on-boarding of personal attributes according to a first embodiment of the invention.

According to the first embodiment, the external entity 200 is a remote server 130 such as a relying party RP or a TSP as previously described. The user device 120 is used as proxy to enable the token 110 to access the remote server 130 via the communication network 140. The token 110 is considered as being an electronic identity card, for illustrative purposes.

Step 301 corresponds to step 201 previously described. The token 110 stores at least one personal attribute of the user. As explained above, no restriction is attached to the at least one personal attribute, which can be a PID for example. In addition, the token 110 stores an elD static public key elD_StaticPubK and an elD static private key elD_StaticPriK. The token may also store public information authenticating the token 110, such as a public certificate elD_StaticPubKCertif identifying the elD static public key. Alternatively, the elD_StaticPubKCertif may be stored on a cloud server and the token can indicate to a third party where the certificate can be found. The token 110 may also store a public root key of a certification authority CA_Root_PubK, the certification authority being not shown on the figures.

In what follows, the remote server is considered a relying party RP, for illustrative purpose.

At step 302, the RP 130 stores public information authenticating the RP 130, such as a public certificate RP_PubKCertif, issued by the above certification authority. Alternatively, the elD_StaticPubKCertif may be stored on a cloud server and the token can indicate to a third party where the certificate can be found. The public certificate may identify an RP static public key, noted RP_StatPubK, and identify the RP 130. The RP 130 may also store an RP static private key, RP_StatPrivK.

At step 302, the RP 130 may further generate a pair of ephemeral keys, comprising an RP ephemeral public key RP_EPubK and an RP ephemeral private key RP_EPrivK.

At step 303, the token 110 is connected to the user device 120. No restriction is attached to the connection, which can be wired, via a wired card reader for example, or wireless, via NFC for example. Alternatively, as explained above, the token 110 may be software, and stored on the user device 120, in which case step 303 is optional.

At step 304, the user device 120, which is able to access the communication network 140, and therefore which is able to communicate with the RP 130, sends a first request to the RP 130. As explained above, the request can be a service request requesting access to a service provided by the RP 130.

In response to the first request, the RP 130 may send a second request to the user device 120 at step 305, the second request identifying at least one requested personal attribute that is required to access the service provided by the RP 130. In complement, the second request may identify a level of assurance that is required to access the service. The LoA can be "High" for example.

In addition, the second request may comprise public information identifying the RP 130, such as the public certificate RP_PubKCertif. The second request may further comprise the RP ephemeral public key RP_EPubK. In addition, the second request may further comprise a signature of the RP ephemeral public key RP_EPubK, the signature being noted SIGN(RP_EPubK) and being obtained by ciphering RP_EPubK with the RP static private key RP_StatPrivK.

Therefore, steps 303, 304, 305 306 and 307 may correspond to main step 203 described when referring to figure 2.

At step 306, the at least one requested personal attribute can be displayed on a graphical user interface of the user device 120, so as to request user consent to on-board the at least one requested personal attribute. The user can therefore approve or refuse to provide the at least one requested personal attribute. When several personal attributes are requested, the user can collectively approve or refuse to on-board the several personal attributes. Alternatively, the user may consent to provide some of the requested personal attributes, and refuse to provide other requested personal attribute or attributes.

If the user consents to provide the at least one requested personal attribute, the second request is transferred to the token 110, by the user device 120, without being modified, at step 307.

If the user refuses to provide at least one of the requested personal attribute, the method can be interrupted. Alternatively, a response can be sent by the user device 120 to the RP 130 indicating that the consent for some of the requested personal attributes has not been obtained. The RP 130 can whether approve to provide the service by on-boarding only the consented personal attribute or attributes, or can decline and interrupt the communication session.

If the RP 130 approves to provide the service by on-boarding only the consented personal attributes, the second request is transmitted by the user device 120 to the token 110 by replacing the requested at least one personal attribute by the consented at least one personal attribute.

At step 308, the token 110 may authenticate the RP 130. The authentication may be based on the public certificate RP_PubKCertif provided by the RP 130. Preferably, the RP_PubKCertif is checked using the root public key of the certification authority CA_Root_PubK. When authenticating the RP 130, the token 110 can further verify that the authenticated 130 is a trusted server. To this end, the token 110 may check that the RP 130 belongs to a list of trusted servers. Step 308 therefore corresponds to main step 204 described when referring to figure 2.

If the token 110 authenticates the RP 130 and has verified that the RP 130 can be trusted, the method can go on with step 309. Else, the method can be interrupted.

At step 309, the token 110 computes at least one shared session key. No restriction is attached to the shared session key, which is a session key which can be computed by both the token 110 and the RP 130. Step 309 corresponds to main step 206 of Figure 2.

An example of computation of at least one shared session key is described hereafter.

The token 110 may first check the signature SIGN(RP_EPubK) of the ephemeral public key of the RP 130, using the public key RP_PubK contained in the public certificate RP_PubKCertif. This enables to ensure the integrity of the ephemeral public key of the RP 130.

Then, the token 110 may generate a pair of token ephemeral keys, comprising a token ephemeral public key eID_EPubK and a token ephemeral private key eID_EPrivK.

The token 110 may then generate a common secret based on the token ephemeral private key elD_EPrivK and the RP ephemeral public key RP_EPubK. The common secret may be generated based on well-known elliptic curve algorithms, such as Elliptic Curve Diffie-Hellman algorithm, ECDH, or Rivest-Shamir-Adleman Diffie-Hellman RSA DH algorithm.

The token 110 then applies a key derivation function to the common secret to obtain at least one shared session key, SK. Key derivation functions are well known and are not further detailed in the present description.

At step 310, the token 110 can then compute information to be transmitted to the RP 130, in particular:
- public information related to the token 110, to allow the RP 130 to authenticate the token 110;
- information that allows the RP 130 to also compute the at least one shared session key SK.

To this end, the token 110 may cipher its public certificate by encrypting it using the shared session key SK, to obtain eID_CIPHER = ENC(eID_StaticPubKCertif)_{SK}). This allows the RP 130 to authenticate the token 110 after determining the at least one shared session key SK.

The token may then concatenate eID_CIPHER with the token ephemeral public key eID_EPubK and optionally, but preferably, with a signature of the eID_EPubK obtained signed by the static private key elD_StaticPrivK. The following concatenated information is obtained: {eID_CIPHER || elD_EPubK ∥ SIGN(elD_EPubK)_{eID_StaticPrivK}}.

The token 110 transmits the concatenated information to the RP 130 via the user device 120. The token 110 therefore transmits the concatenated information to the user device 120 at step 311, and the user device 120 forwards the concatenated information to the RP 130 at step 312. The user device 120 cannot modify any of the concatenated information as it is encrypted with the shared session key SK or signed with the token static private key. The user device 120 therefore only acts as a proxy to forward the concatenated information.

At step 313, the RP 130 computes the at least one session key based at least partially on the concatenated information. Step 313 also corresponds to main step 206 of Figure 2.

To this end, the RP 130 can compute the common secret based on the token ephemeral public key elD_EPubK comprised in the concatenated information, and based on the RP ephemeral private key RP_EPrivK. The same common secret can therefore be obtained by the RP 130 and the token 110.

The RP 130 then derives the at least one shared session key SK from the common secret, by applying the same key derivation function as the token 110.

At step 314, the RP 130 authenticates the token 110 based on the at least one shared session key SK and the concatenated information. In particular, the RP 130 may decipher the encrypted certificate eID_CIPHER using the shared session key SK. If the deciphering operation succeeds, this validates the fact that the shared session key SK is the same as the one computed by the token 110. The RP 130 therefore obtains the public certificate of the token eID_StaticPubKCertif, from which it can extract the token static public key eID_StaticPubK, which can be used to verify the signature of the token ephemeral public key eID_EPubK.

The RP 130 may also retrieve information in the public certificate of the token 110 regarding the level of assurance, LoA, associated with the token 110. The token 110 can be considered as trusted by the RP 130 if the LoA is "High". Alternatively, the token 110 can be considered as trusted by the RP 130 if the LoA is "Substantial" or "High". Step 314 corresponds to main step 205 of figure 2.

If the LoA of the token 110 is too low, the RP 130 can end the on-boarding process and the method ends.

Else, the RP 130 may generate a confirmation message at step 315. The confirmation message may be ciphered using the shared session key SK.

The RP 130 transmits the ciphered confirmation message to the user device 120 at step 316.

At step 317, the user device 120 forwards the ciphered confirmation message to the token 110. The user device 120 is not able to modify the ciphered confirmation message as it is not able to compute the shared session key SF.

At step 318, the token 110 deciphers the ciphered confirmation message using the shared session key SK.

The confirmation message may optionally comprise a secure list of at least one personal attribute, which is the same as the one provided at step 305 previously described, if the one provided at step 305 has not been modified before transmission to the token, for example by the user device 120. Because at step 317, the user device 120 is not able to modify the secure list, the token 110 may therefore verify that the list received at step 307 is the same as the secure list received at step 317 and deciphered at step 318.

At step 319, the token 110 ciphers the at least one requested personal attribute using the at least one shared session key SK. When the user provides consent, the ciphered at least one requested personal attribute is among the at least one consented personal attribute. Also, when a secure list is received at step 317, the ciphered at least one attribute is among the at least one personal attribute of the secure list. The on-boarded personal attribute is therefore a personal attribute that satisfies both criteria: consented by the user and requested by an authenticated external entity. This also avoids the external entity to request additional personal attributes in the secure list of step 317, for which the user did not previously provide consent. The privacy associated with the method is therefore enhanced.

At step 320, the token 110 transmits the ciphered at least one personal attribute to the user device 120 so that it forwards the ciphered at least one personal attribute to the RP 130 at step 321.

Upon reception of the ciphered at least one personal attribute, the RP 130 deciphers the at least one personal attribute at step 322, using the at least one shared session key SK. The RP 130 may therefore check that the at least one personal attribute corresponds to the requested personal attribute or attributes, and, depending on the result of the check, may provide access to a service or give access to a resource to the user corresponding to the at least one personal attribute.

Therefore, the method according to figure 3 allows a secure on-boarding of at least one personal attribute from the token 110 to a remote server 130.

**Figure 4** shows the steps of a method for on-boarding of personal attributes according to a second embodiment of the invention.

According to the second embodiment, the external entity 200 is the user device 120 previously described. Again, the token 110 is considered as being an electronic identity card, for illustrative purposes.

Step 401 corresponds to main step 201 previously described. The token 110 stores at least one personal attribute of the user. As explained above, no restriction is attached to the at least one personal attribute, which can be a PID for example. In addition, the token 110 stores an elD static public key elD_StaticPubK and an elD static private key eID_StaticPriK. The token may also public information authenticating the token 110, such as a public certificate elD_StaticPubKCertif identifying the elD static public key. The token 110 may also store a public root key of a certification authority CA_Root_PubK, the certification authority being not shown on the figures.

At step 402, the user device 120 stores public information authenticating the user device 120, such as a public certificate UD_PubKCertif, issued by the above certification authority. The public certification may identify a user device static public key, noted UD_StatPubK. The user device 120 may also store a user device static private key, UD_StatPrivK.

At step 402, the user device 120 may further generate a pair of ephemeral keys, comprising a user device ephemeral public key UD_EPubK and a user device ephemeral private key UD_EPrivK.

At step 403, the token 110 is connected to the user device 120. No restriction is attached to the connection, which can be wired, via a wired card reader for example, or wireless, via NFC for example. Alternatively, as explained above, the token 110 may be software, and stored on the user device 120, in which case step 403 is optional.

At step 404, the token 110 may send a request to the user device 120, the request requesting to on-board at least one personal attribute on the digital wallet 121 of the user device 120. The request may therefore identify the one or several personal attributes that are stored on the token 110.

At step 405, the at least one personal attribute identified in the request can be displayed on a graphical user interface of the user device 120, so as to request user consent to on-board the at least one personal attribute. The user can therefore approve or refuse to provide the at least one personal attribute. When several personal attributes are identified, the user can collectively approve or refuse to on-board the several personal attributes. Alternatively, the user may consent to provide some of the personal attributes to the digital wallet 121, and refuse to provide other requested personal attribute or attributes.

In response to the request, and following optional step 406, the user device may send a first confirmation message to the token 110, at step 406. The first confirmation message may indicate the consented at least one personal attribute that can be transferred to the digital wallet 121. In complement, the first confirmation message may identify a level of assurance that is required by the user device 120. The LoA can be "High" for example.

In addition, the first confirmation message may comprise public information identifying the user device 120, such as the public certificate UD_PubKCertif. The first confirmation message may further comprise the user device ephemeral public key UD_EPubK. In addition, the first confirmation message may further comprise a signature of the user device ephemeral public key UD_EPubK, the signature being noted SIGN(UD_EPubK) and being obtained by signing UD_EPubK with the user device static private key UD_StatPrivK.

Therefore, steps 403, 404, 405 and 406 may correspond to step 203 described when referring to figure 2.

At step 407, the token 110 may authenticate the user device 120. The authentication may be based on the public certificate UD_PubKCertif provided by the user device 120. Preferably, the UD_PubKCertif is checked using the root public key of the certification authority CA_Root_PubK. When authenticating the user device 120, the token 110 can further verify that the user device 120 can be trusted. To this end, the token 110 may verify that a level of assurance of the user device 120 is "high". The LoA of the user device 120 may be evaluated based on information contained in the public certificate UD_PubKCertif. Step 407 therefore corresponds to main step 204 described when referring to figure 2.

If the token 110 authenticates the user device 120 and has verified that the user device 120 can be trusted, the method can go on with step 408. Else, the method can be interrupted.

At step 408, the token 110 computes at least one shared session key. No restriction is attached to the shared session key, which is a session key which can be computed by both the token 110 and the RP 130. Step 309 corresponds to step 206 of Figure 2.

An example of computation of at least one shared session key is described hereafter.

The token 110 may first check the signature SIGN(UD_EPubK) of the ephemeral public key of the user device 120, using the public key UD_PubK contained in the public certificate UD_PubKCertif. This enables to ensure the integrity of the ephemeral public key of the user device 120.

Then, the token 110 may generate a pair of token ephemeral keys, comprising a token ephemeral public key eID_EPubK and a token ephemeral private key eID_EPrivK.

The token 110 may then generate a common secret based on the token ephemeral private key elD_EPrivK and the user device ephemeral public key UD_EPubK.

The token 110 then applies a key derivation function to the common secret to obtain at least one shared session key, SK.

At step 409, the token 110 can compute information to be transmitted to the user device 120, in particular:
- public information related to the token 110, to allow the user device 120 to authenticate the token 110;
- information that allows the user device 120 to also determine the at least one shared session key SK.

To this end, the token 110 may cipher its public certificate by encrypting it using the shared session key SK, to obtain eID_CIPHER = ENC(elD_StaticPubKCertif)_{SK}). This allows the user device 120 to authenticate the token 110 after determining the at least one shared session key SK.

The token 110 may then concatenate eID_CIPHER with the token ephemeral public key eID_EPubK and optionally, but preferably, with a signature of the eID_EPubK obtained based on the static private key elD_StaticPrivK. The following concatenated information is obtained: {eID_CIPHER ∥ elD_EPubK ∥ SIGN(eID_EPubK)eID_StaticPrivK}.

The token 110 transmits the concatenated information to the user device 120 at step 410.

At step 411, the user device 120 computes the at least one shared session key based at least partially on the concatenated information. Step 411 also corresponds to main step 206 of Figure 2.

To this end, the user device 120 can compute the common secret based on the token ephemeral public key eID_EPubK comprised in the concatenated information, and based on the user device ephemeral private key UD_EPrivK. The same common secret can therefore be obtained by the user device 120 and the token 110.

The user device 120 then derives the at least one shared session key SK from the common secret, by applying the same key derivation function as the token 110.

At step 412, the user device 120 authenticates the token 110 based on the at least one shared session key SK and the concatenated information. In particular, the user device 120 may decipher the encrypted certificate eID_CIPHER using the shared session key SK. If the deciphering operation succeeds, this validates the fact that the shared session key SK is the same as the one computed by the token 110. The user device 120 therefore obtains the public certificate of the token eID_StaticPubKCertif, from which it can extract the token static public key elD_StaticPubK, which can be used to verify the signature of the token ephemeral public key elD_EPubK.

The user device may also retrieve information in the public certificate of the token 110 regarding the level of assurance, LoA, associated with the token 110. The token 110 can be considered as trusted by the user device 120 if the LoA is "High". Alternatively, the token 110 can be considered as trusted by the user device 120 if the LoA is "Substantial" or "High". Step 412 corresponds to main step 205 of figure 2.

If the LoA of the token 110 is too low, the user device 120 can end the on-boarding process and the method ends.

Else, the user device 120 may generate a second confirmation message at step 413. The second confirmation message may be ciphered using the shared session key SK.

The user device 120 transmits the ciphered second confirmation message to the user device 120 at step 414.

At step 415, the token 110 deciphers the ciphered confirmation message using the shared session key SK.

At step 416, the token 110 ciphers the stored at least one personal attribute using the at least one shared session key SK. When the user provides consent, the ciphered at least one personal attribute is among the at least one consented personal attribute.

At step 417, the token 110 transmits the ciphered at least one personal attribute to the user device 120.

Upon reception of the ciphered at least one personal attribute, the user device 120 deciphers the at least one personal attribute at step 418, using the at least one shared session key SK. The user device 120 may therefore store the at least one personal attribute in the digital wallet 121.

The exchanges at steps 414 and 417 therefore belong to a secure communication session between the user device 120 and the token 110, which corresponds tomain step 207 of figure 2.

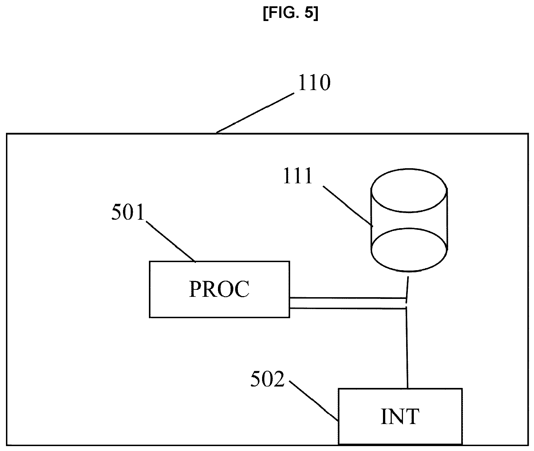

**Figure 5** shows the structure of a token 110 according to some embodiments of the invention.

The token 110 comprises a processor 501 and the memory 111.

The processor 501 may comprise one or multiple microprocessors, a Central Processing Unit (CPU), on a single Integrated Circuit (IC) or several IC chips.

No restriction is attached to the memory 111, which may be any non-transient, tangible form of memory. For example, it can comprise ROM, EEPROM and/or flash memory. The processor 501 may be programmable and may be configured to execute instructions that are stored in its internal memory or to execute instructions that are stored in the memory 111.

The memory 111 can indeed store instructions for implementing the steps 204, 206, 303, 308, 309, 310, 311, 318, 319, 320, 403, 404, 407, 408, 409, 415 and/or 416, previously described.

Alternatively, the processor 501 may comprise fixed-functionality hardware logic or configurable logic, configured to implement the steps 203, 204, 206, 207 and/or steps 308, 309, 310, 318, 319, and/or steps 407, 408, 409, 410, 415, 416 417, previously described.

The memory 111 further stores at least one personal attribute, as previously explained.

The token 110 further comprises an interface 502 configured to communicate with external entities via the communication link 170 previously described.

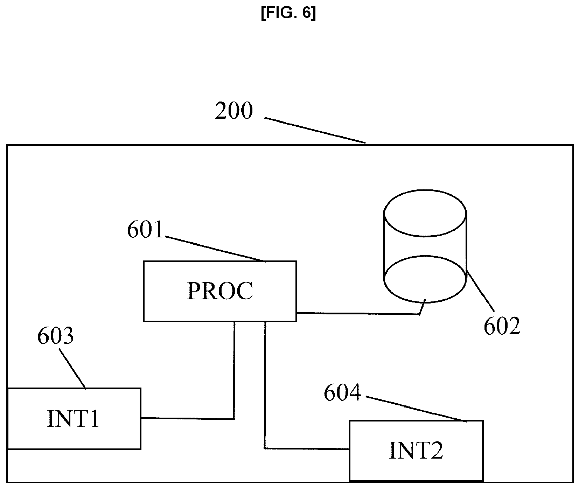

**Figure 6** describes an external entity 200 according to several embodiments of the invention.

As previously explained, the external entity 200 may be a user device 110 or the remote server 130.

The external entity 200 comprises a processor 501 and a memory 502.

The processor 501 may comprise one or multiple microprocessors, a Central Processing Unit (CPU), on a single Integrated Circuit (IC) or several IC chips.

No restriction is attached to the memory 502, which may be any non-transient, tangible form of memory. For example, it can comprise ROM, EEPROM and/or flash memory. The processor 501 may be programmable and may be configured to execute instructions that are stored in its internal memory or to execute instructions that are stored in the memory 502.

If the external entity 200 is the remote server 130, the memory 502 can indeed store instructions for implementing steps 305, 313, 314, 315, 316 and 322 as previously described.

If the external entity 200 is the user device 120, the memory 502 can store instructions for implementing steps 403, 405, 406, 411, 412, 413, 414 and 418. The user device 120 may further comprise a graphical user interface that is not shown on figure 6.

Alternatively, the processor 501 may comprise fixed-functionality hardware logic or configurable logic, configured to implement the above listed steps.

The external entity 200 further comprises a first interface 503.

If the external entity 200 is the remote server 130, the first interface 503 can be a network interface for communicating via the network 140. The first interface 503 can therefore be an IP port for example.

If the external entity 200 is the user device 120, the first interface 503 may also be a network interface for communicating via the network 140. The first interface 503 can therefore be an IP port for example.

The external entity 200 may further comprise a second interface 504.

If the external entity 200 is the remote server 130, the second interface 504 is optional. It can for example be an interface to communicate with the storage 140 shown on figure 1.

If the external entity 200 is the user device 120, the second interface 504 is an interface arranged to communicate with the token via the communication link 170 previously described. The exemplifying embodiments are described in sufficient detail to enable those of ordinary skill in the art to embody and implement the systems and processes herein described. It is important to understand that embodiments can be provided in many alternate forms and should not be construed as limited to the examples set forth herein.

## Claims

1. A method for on-boarding at least one personal attribute from a token (110) to an external entity (200; 120; 130), the method comprising:
- authenticating (204; 308; 407) the external entity by the token;
- if the external entity is authenticated, computing (206; 309; 313; 408; 411) at least one shared session key by both the external entity and the token;
- ciphering (319; 416) at least one personal attribute stored by the token based on the at least one shared session key;
- on boarding the at least one personal attribute from the token to external entity the by transferring (207; 320; 321; 417) the ciphered at least one personal attribute to the external entity, on a communication link (170; 180) between the token and the external entity.

2. The method according to claim 1, wherein, if the external entity (200; 120; 130) is authenticated, the token (110) transmits (311; 410) at least one public information of the token to the external entity (200; 120; 130), and wherein the external entity verifies (205; 314; 412) a level of assurance of the token based on the at least one public information of the token.

3. The method according to claim 2, wherein if the level of assurance of the token is verified, the external entity (200; 120; 130) sends (316; 414) a confirmation to the token (110), and wherein the token ciphers (319; 416) the at least one personal attribute and transfers (207; 320; 321; 417) the ciphered at least one personal attribute to the external entity only if the confirmation is received by the token.

4. The method according to one of the preceding claims, wherein authenticating (204; 308; 407) the external entity comprises receiving (307; 406) a public certificate of the external entity, and verifying the public certificate using a public key of a certification authority.

5. The method according to one of the preceding claims, wherein the external entity (200; 120; 130) generates a pair of external entity ephemeral keys comprising an external entity ephemeral public key and an external entity ephemeral private key, wherein the external entity ephemeral public key is signed with a static private key of the external entity and is transmitted by the external entity to the token (110), wherein the token generates a pair of token ephemeral keys comprising a token ephemeral public key and a token ephemeral private key, and wherein the token ephemeral public key is transmitted from the token to the external entity; wherein the token determines (206; 309; 408) the at least one shared session key based on the token ephemeral private key and the external entity ephemeral public key, and the external entity determines (206; 313; 411) the at least one shared session key based on the token ephemeral public key and the external entity ephemeral private key.

6. The method according to one of claims 1 to 5, wherein the token (110) is connected to a user device (120), wherein the external entity (200) is a remote server (130), wherein the user device is able to access the remote server via a communication network (140).

7. The method according to claim 6, comprising a prior step of requesting (304) a service to the remote server (130) by the user device (120), and in response to the service request, receiving (307; 406) a list of at least one requested personal attribute from the remote server, said list of at least one requested personal attribute being conditional for accessing a service provided by the remote server;
wherein the at least one personal attribute on boarded on the remote server is comprised in the list of at least one requested personal attribute.

8. The method according to claim 7, wherein the received list of at least one requested attribute is displayed (306; 405) on a graphical user interface of the user device (120), wherein the method further comprises receiving a validation input for at least one validated personal attribute in the list of at least one requested personal attribute, and
wherein the at least one attribute on-boarded on the remote server (130) is among the at least one validated personal attribute.

9. The method according to claims 3 and 8, wherein the confirmation comprises a secure list of at least one requested personal attribute, wherein the token ciphers and transfers the at least one requested personal attribute of the secure list, if the at least one requested personal attribute is among the at least one validated personal attribute.

10. The method according to one of claims 1 to 5, wherein the external entity (200) is a user device (120), the user device comprising a digital wallet (121), and wherein, upon reception (417) of the ciphered at least one personal attribute, the user device deciphers (418) the at least one ciphered personal attribute based on the at least one shared session key, and stores the at least one personal attribute in the digital wallet.

11. A system (100) for on-boarding personal attributes from a token to an external entity, comprising:
- a communication link (170; 180) between the token (110) and the external entity (200; 120; 130);
- the token, storing at least one personal attribute, and being configured to authenticate the external entity, and, if the external entity is authenticated, to compute at least one shared session key;
- the external entity being configured to compute the shared session key;
wherein the token is further configured to cipher at least one of the stored personal attribute based on the at least one shared session key and to transfer the ciphered at least one personal attribute to the external entity, on the communication link, so as to on-board the at least one personal attribute on the external entity.
